# EUROPÄISCHE PATENTANMELDUNG

(11) **EP 1 229 006 A2**
(43) Veröffentlichungstag der Anmeldung: **07.08.2002**
(21) Anmeldenummer: 02405072.6
(22) Anmeldetag: 04.02.2002
(51) Int. Cl.: C04B 28/02, C04B 38/00

(54) **Verfahren zur Herstellung von porösen Festkörpern auf Zementbasis, nach diesem Verfahren hergestellter Festkörper sowie Verwendung des Festkörpers**

(30) Priorität: 06.02.2001 CH 2022001
(71) Anmelder: Eberhard Recycling AG, 8302 Kloten (CH)
(72) Erfinder: Bunge, Rainer, 8006 Zürich (CH); Rüegg, Walter, 8405 Winterthur (CH); Jahn, Erich, 5614 Sarmenstorf (CH)
(74) Vertreter: Groner, Manfred

(57) **Zusammenfassung**

Die Erfindung stellt sich zur Aufgabe hochporöse Festkörper auf Zementbasis mit einem zusammenhängenden Kapillarporensystem bereitzustellen. Der erfindungsgemässen Lösung liegt der Gedanke zugrunde, dass sich derartige Festkörper aus Zementsuspensionen mit hohem Wasser/Bindemittel-Faktor herstellen lassen. Um in derart verdünnten Suspensionen ein absedimentieren der Zementpartikeln zu verhindern, wird der Suspension basisches Magnesiumcarbonat zugegeben, wodurch eine starke Viskositätserhöhung durch Gelbildung bewirkt wird. Nach Aushärten des Zementes besitzt der Festkörper die gewünschten Eigenschaften. Das in den erfindungsgemässen Festkörpern vorliegende zusammenhängende System aus Kapillarporen ermöglicht eine Vielzahl von Anwendungen, im Besonderen in der Filtrationstechnik.

## Beschreibung

Die Erfindung betrifft ein Verfahren zur Herstellung von porösen Festkörpern auf Zementbasis gemäss Oberbegriff des Anspruchs 1. Die Erfindung betrifft zudem einen nach diesem Verfahren hergestellten Festkörper sowie Verwendungen des Festkörpers.

Poröse Festkörper auf Zementbasis sind bereits seit geraumer Zeit Stand der Technik. Ein typischer Vertreter dieser Gruppe ist der Gasbeton, der innerhalb der Zementsteinmatrix eingelagerte Kugelporen enthält. Derartige Produkte besitzen allerdings kein zusammenhängendes Kapillarporensystem. Die durch die Zementsteinmatrix verlaufenden Kapillaren werden vielmehr durch eingelagerte Kugelporen unterbrochen. In vielen Anwendungen ist jedoch ein Kapillarporensystem von grossem Vorteil.

Die Erfindung stellt sich zur Aufgabe ein Verfahren der genannten Art bereitzustellen, mit dem poröse und vorzugsweise hochporöse Festkörper auf Zementbasis, die über ein Kapillarporensystem verfügen, hergestellt werden. Dabei sollen vorzugsweise umweltfreundliche Zusätze verwendet werden. Die Aufgabe ist mit dem Verfahren gemäss Anspruch 1 gelöst.

Dem Lösungsansatz liegt der Gedanke zugrunde, dass sich poröse Festkörper aus einer Zementsuspension mit hohem Wasser-Bindemittel-Faktor (W/B-Faktor) herstellen lassen. Ueberschreitet der W/B Faktor allerdings den Wert von etwa 0.5, bleiben die im Wasser dispergierten Zementteilchen nicht mehr in Suspension, sondern setzen sich ab. Ueberschüssiges Wasser steht dann über und wird nicht in den Festkörper eingebunden. Diesem Effekt kann gemäss der Erfindung dann besonders wirkungsvoll entgegengewirkt werden, wenn der Suspension ein Geliermittel zugesetzt wird, wodurch sich die Viskosität der Suspension so stark erhöht, dass die Zementteilchen nicht absedimentieren, sondern in Schwebe gehalten werden. Nach dem Aushärten entsteht dann ein hochporöser Festkörper. Als Geliermittel eignen sich diverse in der Zementtechnologie verbreitete Zusätze, die jedoch im allgemeinen teuer und wenig umweltfreundlich sind.

In dem erfindungsgemässen Verfahren wird als Geliermittel basisches Magnesiumcarbonat benutzt. Dieses wird dem Zement typischerweise mit ca. 10-20 Massen% zugesetzt. Ein Kilogramm dieser Mischung kann nun rund 1.5 L Wasser (W/B-Faktor 1.5) zu einem Gel abbinden, sodass nach Aushärtung der Suspension ein hochporöser Festkörper entsteht, der zu fast 80 Volumen% (bzw, 60 Massen%) aus Wasser besteht. Der überwiegende Teil des Wassers liegt in einem zusammenhängenden Kapillarsystem vor.

Unser Ansatz zur gezielten Erhöhung des W/B-Faktors steht im deutlichen Gegensatz zur konventionellen Zementtechnologie, wo im allgemeinen ein möglichst kleiner W/B-Faktor angestrebt wird und die durch überschüssiges Wasser bewirkte Kapillarporenbildung unterdrückt werden soll (wegen der damit verbundenen Verringerung der Festigkeit des zementösen Festkörpers). Dennoch gibt es vereinzelte Hinweise aus der Patentliteratur, wo die Verdickung von Zementsuspensionen, denen basisches Magnesiumcarbonat beigemischt wurde, erwähnt ist. In der JP58042226B wird zur Stabilisierung von Fundamenten vorgeschlagen, eine Suspension von Zement und Magnesiumcarbonat in den Boden zu injizieren. Es wird im besonderen darauf hingewiesen, dass die Zementteilchen hierbei in Schwebe bleiben. Die JP03004497B4 ist im wesentlichen identisch, jedoch mit der Ergänzung, dass zusätzlich noch Natriumaluminat zur Abbindebeschleunigung zugegeben wird. Auch dieses Patent bezieht sich auf die Verfestigung des Untergrundes durch Injektion der zementbasierenden Suspension in den Boden.

Im Gegensatz zu diesem Stand der Technik betrifft die vorliegende Erfindung die Herstellung eines Festkörpers mit besonderen Eigenschaften, die über eine blosse Festigkeitsentwicklung weit hinausgehen. Zu diesen Eigenschaften zählt im besonderen eine hohe Porosität durch das zusammenhängende Kapillarporensystem und die damit verbundenen interessanten Anwendungsmöglichkeiten. Für die in oben diskutierten japanischen Schriften angestrebte Verfestigung des Untergrundes ist eine hohe Porosität wegen der damit zusammenhängenden Einbusse an Endfestigkeit primär unerwünscht und wird nur wegen der Notwendigkeit den Zement in dünnflüssiger Form zu injizieren billigend in Kauf genommen.

Abgesehen von der ausserordentlich ausgeprägten Gelbildung des basischen Magnesiumcarbonates in Zementsuspensionen ist ein besonderer Vorteile der vorliegenden Erfindung ihre Umweltfreundlichkeit. Basisches Magnesiumcarbonat selbst ist in wässriger Lösung schwach basisch und wirkt puffernd auf hochalkalische Lösungen, indem OH-Ionen als schwerlösliches Mg(OH)₂ ausgefällt werden. Es geliert nicht nur in Suspensionen von Portlandzement, sondern auch in solchen aus Tonerdezement, was die Herstellung von schwach alkalischen porösen Festkörpern ermöglicht (dies im Gegensatz zu Festkörpern auf der Basis des hochalkalischen Portlandzementes). Da Magnesiumcarbonat anorganisch ist, sind auch langfristig keine Probleme mit Zersetzungsprodukten zu erwarten.

Selbstverständlich kommen viele der bekannten Anwendungen von Gasbeton auch für die erfindungsgemässen Festkörper in Frage, z.B. in der thermischen und akustischen Isolation und im Brandschutz.

Spezifische Anwendungen der Erfindung ergeben sich durch Ausnutzung des zusammenhängenden Kapillarsystems, entweder unmittelbar, oder nach Trocknung der Festkörper.

Das erfindungsgemässe Verfahren eignet sich beispielsweise besonders zur Herstellung von Filterplatten für Flüssigkeiten. Der grosse Vorteil gegenüber keramischen Filtern besteht darin, dass die Suspension giessfähig ist und daher auch grosse Wannen mit der Filterschicht fugenlos ausgegossen werden können. Durch den gezielten Zusatz von Adsorbentien oder Fällungsmitteln zur Zementsuspension können die Filterplatten derart präpariert werden, dass auch gelöste Schadstoffe in der porösen Zementmatrix zurückgehalten werden. Da der erfindungsgemässe poröse Festkörper aus Zement und Magnesiumcarbonat hergestellt werden kann, sind Anwendungen im Lebensmittelbereich, z.B. in der Trinkwasseraufbereitung denkbar.

Sehr interessante Anwendungen ergeben sich, wenn der erfindungsgemässe Festkörper getrocknet wird. In diesem Fall können Filterplatten zur Gasreinigung hergestellt werden. Auch hier können, z.B. durch Einlagerung von Katalysatoren, zusätzliche chemische Effekte erzielt werden.

Der getrocknete Festkörper können eignet sich besonders auch zum Aufnehmen und zur Speicherung von Flüssigkeiten oder Gasen, z.B. Brennstoffen. Weitere naheliegende Anwendungen erstrecken sich auf die Verwendung als granulierter Oelbinder, z.B. indem das Kapillarsystem durch Zusatz von Hydrophobierungsmitteln zur Zementsuspension präpariert wird.

Wird die Oberfläche des erfindungsgemässen Festkörpers mit einer Dichte <1000kg/m³ versiegelt, z.B. durch einen Anstrich, ist er in Wasser schwimmfähig.

## Patentansprüche

1. Verfahren zur Herstellung von porösen Festkörpern auf Zementbasis, **gekennzeichnet durch** Abbindung einer Suspension aus 10 Gewichtsanteilen Zement, wenigstens 0.5 Gewichtsanteilen basischem Magnesiumcarbonat und wenigstens 5 Gewichtsanteilen Wasser.

2. Verfahren nach Anspruch 1 **dadurch gekennzeichnet, dass** der Zement ein Portlandzement ist.

3. Verfahren nach Anspruch 1 **dadurch gekennzeichnet, dass** der Zement ein Portland-Mischzement ist.

4. Verfahren nach Anspruch 1 **dadurch gekennzeichnet, dass** der Zement ein Tonerdezement ist.

5. Verfahren nach einem der Ansprüche 1 bis 4 **dadurch gekennzeichnet, dass** der Gewichtsanteil an basischem Magnesiumcarbonat zwischen 0.5 und 3 Gewichtsanteilen liegt, vorzugsweise zwischen 1 und 2 Gewichtsanteilen.

6. Verfahren nach einem der Ansprüche 1 bis 5 **dadurch gekennzeichnet, dass** der Wassergehalt zwischen 5 und 20 Gewichtsanteilen liegt, vorzugsweise zwischen 8 und 15 Gewichtsanteilen.

7. Verfahren nach einem der Ansprüche 1 bis 6 **gekennzeichnet dadurch, dass** der Suspension Zuschlag- oder Füllstoffe zugesetzt werden, im besonderen mineralische oder organische Baustoffe, z.B. Blähton, Blähglas, Sand, Fasern, Schaumstoffe und dergleichen.

8. Verfahren nach einem der Ansprüche 1 bis 7 **gekennzeichnet dadurch, dass** der Suspension zusätzlich Adsorbentien, Absorbentien, Hydrophobierungmittel, Katalysatoren, oder chemische Reagenzien zur chemischen Fällung von Schadstoffen, im besonderen von Schwermetallen, zugesetzt werden.

9. Verfahren nach einem der Ansprüche 1 bis 8 **gekennzeichnet dadurch, dass** der Suspension konventionelle Betonzusatzmittel beigegeben werden, beispielsweise Gips, Natriumcarbonat, Calciumchlorid, Natriumaluminat oder Aluminiumpulver.

10. Verfahren nach einem der Ansprüche 1 bis 9 **dadurch gekennzeichnet, dass** die Suspension in eine Form gegossen wird und darin aushärtet.

11. Verfahren nach Anspruch 10 **dadurch gekennzeichnet, dass** der Festkörper nach dem Aushärten aus der Form ausgeschalt wird.

12. Poröser Festkörper hergestellt nach dem Verfahren gemäss einem der Ansprüche 1 bis 11 , **dadurch gekennzeichnet, dass** dieser ein Porenvolumen zwischen 50% und 85% aufweist, vorzugsweise ein Porenvolumen zwischen 60% und 80%.

13. Poröser Festkörper gemäss Anspruch 12 , **dadurch gekennzeichnet, dass** dieser nach Austreiben des Wassers über ein weitgehend gasgefülltes (z.B. luftgefülltes) offenes Kapillarporensystem verfügt.

14. Poröser Festkörper gemäss Anspruch 13 , **dadurch gekennzeichnet, dass** dieser ein spezifisches Gewicht von weniger als 1000kg/m³ aufweist.

15. Poröser Festkörper gemäss Anspruch 13 oder 14 **dadurch gekennzeichnet, dass** das Kapillarporensystem an der Oberfläche des Festkörpers gegen Flüssigkeiten oder Gase versiegelt ist.

16. Verwendung des porösen Festkörpers nach einem der Ansprüche 12 bis 15 als Formstein.

17. Verwendung des porösen Festkörpers nach einem der Ansprüche 12 bis 15 zur thermischen oder akustischen Isolation oder zum Brandschutz.

18. Verwendung des porösen Festkörpers nach einem der Ansprüche 12 bis 15 zur Filtration von Flüssigkeiten oder Gasen.

19. Verwendung des porösen Festkörpers nach einem der Ansprüche 12 bis 15 zur schonenden Absorption von kinetischer Energie, beispielsweise bei aufprallenden Fahrzeugen oder Geschossen.

20. Verwendung des porösen Festkörpers nach einem der Ansprüche 12 bis 15 zur Speicherung von Flüssigkeiten, im besonderen von Wasser oder Brennstoffen.

21. Verwendung des porösen Festkörpers nach einem der Ansprüche 12 bis 15 zur Herstellung von Kapillarsperren.

22. Verwendung des porösen Festkörpers nach Anspruch 13 oder 14 zum Aufsaugen von Flüssigkeiten, beispielsweise von ausgelaufenem Oel.

23. Verwendung des porösen Festkörpers nach einem der Ansprüche 14 oder 15 zur Herstellung von schwimmfähigem Beton.
